# FASCICULE DE BREVET EUROPEEN

(11) **EP 0 678 447 B1**
(45) Date de publication et mention de la délivrance du brevet: **11.11.1998**
(21) Numéro de dépôt: 95400849.6
(22) Date de dépôt: 14.04.1995
(51) Int. Cl.: B64C 9/02, B64C 7/00

(54) **Articulation, notamment pour aéronef, comprenant une charnière et son dispositif de protection**
Gelenk eines Flugzeuges mit einem Steuerflächenscharnier und seiner Schutzvorrichtung
Articulated joint for an aircraft comprising a control surface hinge and its protection device

(30) Priorité: 18.04.1994 FR 9404594
(43) Date de publication de la demande: 25.10.1995
(73) Titulaire: AEROSPATIALE Société Nationale Industrielle, 75781 Paris Cédex 16 (FR)
(72) Inventeur: Chavanne, Jean Louis, F-31880 La Salvetat st. Gilles (FR); Bonenfant, Daniel, F-31840 Aussonne (FR)
(74) Mandataire: Dubois-Chabert, Guy

(56) Documents cités:
- EP-A- 0 397 438
- FR-A- 524 814
- GB-A- 2 238 026

## Description

L'invention concerne une articulation comprenant une charnière de gouverne d'un engin apte à se déplacer dans un fluide, tel qu'un aéronef, un missile, un bateau, un sous marin, etc., ainsi qu'un dispositif de protection permettant de réduire le coefficient de moment de charnière de la gouverne et de réguler et linéariser les variations de ce coefficient en fonction de l'angle de braquage de la gouverne.

Certains aéronefs sont munis de gouvernes non équipées de servocommandes. Dans ce cas, une réglementation impose, pour chaque type de gouverne et indépendamment de la taille de l'aéronef, que l'effort maximal appliqué sur l'organe de commande de la gouverne reste compatible avec la force musculaire susceptible d'être développée par le pilote. Cet effort maximal dépend non seulement du type de gouverne concerné, mais aussi des moyens susceptibles d'être utilisés par le pilote pour assurer la commande (une main, deux mains, pieds, etc.).

Pour un avion de caractéristiques données, l'effort qui doit être appliqué sur l'organe de commande de chacune des gouvernes est proportionnel au coefficient de moment de charnière CmC propre à cette gouverne. A titre d'exemple, pour un avion de transport civil de grande capacité, une variation de 0,01 du coefficient de moment de charnière de la gouverne de profondeur peut se traduire par une variation d'environ 10 kg de l'effort qui doit être appliqué sur l'organe de commande.

Cette observation fait apparaître qu'il est souhaitable de réduire les coefficients de moment de charnière des gouvernes non servocommandées des aéronefs pour maintenir les efforts demandés aux pilotes dans les limites fixées par la réglementation. Il est aussi souhaitable de réguler et de linéariser les variations de ces coefficients qui se produisent lors du braquage des gouvernes.

Trois techniques sont actuellement pratiquées, le plus souvent en combinaison, afin de limiter les coefficients de moment de charnière des gouvernes à des valeurs aussi faibles que possible et afin d'éviter que ces coefficients n'augmentent trop et de façon incontrôlée lorsque les angles de braquage des gouvernes s'accroissent.

La première technique consiste à décaler vers l'arrière l'axe de pivotement de la gouverne par rapport à son bord d'attaque.

La seconde technique consiste à doter ce bord d'attaque d'une ou plusieurs parties proéminentes dites "cornes débordantes ou masquées".

La troisième technique consiste à équiper la gouverne, sur son bord de fuite, d'un volet compensateur articulé (en anglais "tab") qui se braque en sens inverse par rapport à la gouverne.

L'utilisation cumulée de ces trois techniques permet de réduire d'environ 90 % les efforts qui doivent être appliqués sur l'organe de commande pour manoeuvrer une gouverne braquée à 20°, dans le cas d'un avion de transport civil de grande capacité.

Compte tenu de l'évolution des matériaux utilisés en aéronautiques (matériaux composites) et des techniques de fabrication et de contrôle qui leurs sont associées, les caractéristiques d'une même flotte d'avion sont de plus en plus homogènes, de sorte que les risques pour que les gouvernes de certains avions ne répondent pas aux réglementations concernant le niveau d'effort acceptable sur les organes de commande est de plus en plus faible.

Cependant, chacune des charnières par lesquelles la gouverne est articulée sur la structure de l'avion constitue une source de variation aléatoire et incontrôlée du coefficient de moment de charnière. En effet, chaque charnière introduit des discontinuités fonctionnelles qui consistent en un jeu fonctionnel dans le sens transversal, une discontinuité de profil due au décalage de l'axe de l'articulation vers l'arrière par rapport au bord d'attaque, ainsi qu'une interruption de ce bord d'attaque. Ces discontinuités fonctionnelles constituent des sources de décollements locaux de la couche limite. Elles ont donc pour conséquence de réduire l'effet des trois techniques précédemment citées servant à réduire le coefficient de moment de charnière. Il en résulte une perte d'efficacité du volet compensateur à grand braquage, ainsi que des pulsations des gouvernes gênantes pour le pilotage.

L'invention a précisément pour objet une articulation comprenant une charnière de gouverne, ainsi qu'un dispositif de protection conçu pour limiter et stabiliser les discontinuités fonctionnelles introduites inévitablement par cette charnière, de façon à garantir le respect des réglementations relatives à l'effort maximal admissible sur les organes de commande, ce dispositif étant adaptable aussi bien sur des aéronefs existants que sur de nouveaux aéronefs, sans entraîner de modification importante et sans risque de blocage des gouvernes, notamment sous l'effet du gel.

Conformément à l'invention, ce résultat est obtenu au moyen d'une articulation entre une gouverne et une structure d'un engin apte à se déplacer dans un fluide, ladite articulation comprenant une charnière logée dans une entaille formée dans un bord d'attaque de la gouverne et un dispositif de protection comprenant au moins une plaque de fermeture fixée sur la structure et recouvrant partiellement l'entaille, caractérisé par le fait que la plaque de fermeture forme un jeu calibré avec des bords latéraux de l'entaille et comporte, à proximité de ces bords latéraux, des zones de moindre résistance assurant la cassure de la plaque de fermeture sous l'effet d'un effort excédant une valeur déterminée.

L'utilisation d'une plaque de fermeture formant un jeu calibré avec les bords latéraux de l'entaille permet d'améliorer et de stabiliser le comportement aérodynamique de la gouverne à l'emplacement de la charnière. Par conséquent, le coefficient de moment de charnière est réduit et son évolution en fonction de l'angle de braquage est régulée et linéarisée. Il est ainsi plus facile de satisfaire aux réglementations limitant le niveau d'effort appliqué aux organes de commande.

Par ailleurs, l'existence de zones de moindre résistance à proximité des bords latéraux de la plaque de fermeture permet d'assurer en toute circonstance le fonctionnement de la gouverne, même dans le cas où un blocage mécanique dû à un agent extérieur tel que le gel interviendrait, en raison du faible jeu existant entre la plaque de fermeture et les bords latéraux de l'entaille.

Dans une forme de réalisation préférentielle de l'invention, la plaque de fermeture comporte une languette fixée sur la structure et deux plaquettes fixées sur la languette et définissant le jeu calibré précité avec les bords latéraux de l'entaille. Les zones de moindre résistance sont alors formées sur ces plaquettes.

Dans cette forme de réalisation préférentielle de l'invention, chacune des zones de moindre résistance comporte une rainure formée sur chaque plaquette, sensiblement parallèlement à un bord droit de cette dernière tourné vers un bord latéral en vis-à-vis de l'entaille.

Les plaquettes sont alors réalisées en un matériau friable tel que du caoutchouc, du plexiglas (Marque déposée), du carbone, du Kevlar (Marque déposée), etc..

Avantageusement, afin de réduire encore le coefficient de moment de charnière et d'améliorer encore la régulation et la linéarité de ses variations en fonction de l'angle de braquage de la gouverne, le dispositif de protection comprend de plus au moins une pièce de carénage fixée sur la gouverne, à proximité du fond de l'entaille, de façon à relier deux faces opposées de la gouverne selon un profil incurvé. Une fenêtre calibrée, ayant par exemple sensiblement la forme d'un rectangle, est alors formée dans la pièce de carénage pour permettre le passage d'un talon reliant la charnière à la structure.

Dans la forme de réalisation préférentielle de l'invention, la pièce de carénage comprend deux plaques à section incurvée, fixées respectivement sur chacune des faces opposées de la gouverne, et deux feuilles de clinquant à section incurvée reliant les plaques à section incurvée, de part et d'autre de la fenêtre calibrée.

On décrira à présent, à titre d'exemple non limitatif, une forme de réalisation préférentielle de l'invention, en se référant aux dessins annexés, dans lesquels :
- la figure 1 est une vue de dessus représentant l'empennage d'un avion dont les gouvernes de profondeur sont montées sur la structure par des charnières équipées de dispositifs de protection conformes à l'invention ;
- la figure 2 est une vue de dessus, à plus grande échelle, illustrant la charnière de l'une des gouvernes de profondeur de la figure 1 et le dispositif de protection associé ;
- la figure 3 est une vue en coupe selon la ligne III-III de la figure 2 ;
- la figure 4 est une coupe selon la ligne IV-IV de la figure 2 ; et
- la figure 5 est une vue en perspective éclatée représentant les parties du dispositif de protection selon l'invention, montées sur la gouverne et sur la structure qui la supporte, la charnière ainsi que le talon qui la relie à la structure support étant volontairement omis.

On a illustré sur les figures le cas où le dispositif de protection selon l'invention est placé sur les charnière par lesquelles les gouvernes de profondeur 10 d'un avion sont articulées sur une structure 12 de l'empennage. Toutefois, l'invention peut aussi s'appliquer aux autres gouvernes des aéronefs ainsi qu'aux gouvernes équipant des engins de nature différente tels que des missiles, des navires ou des sous-marins.

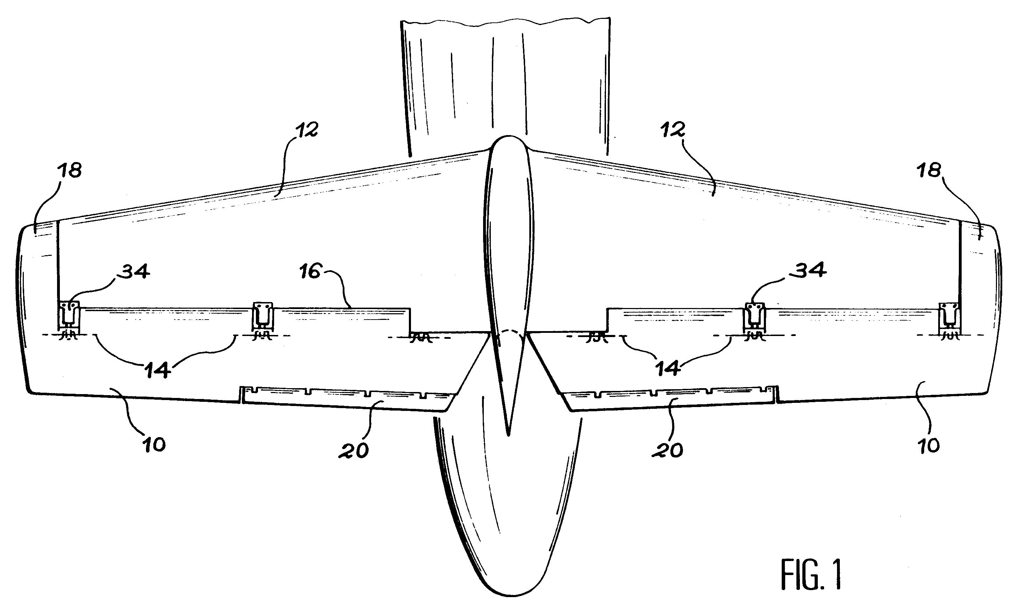

Afin de diminuer autant que possible selon les technologies classiques les coefficients de moment de charnière de chacune des gouvernes 10, les trois techniques classiques sont de préférence utilisées conjointement, comme l'illustre la figure 1. Ainsi, l'axe géométrique 14 par lequel chacune des gouvernes 10 est articulée sur la structure 12 est décalé vers l'arrière par rapport au bord d'attaque 16 des gouvernes. De plus, chacune des gouvernes 10 porte à son extrémité une corne débordante 18. Enfin, un volet compensateur 20 est articulé sur la partie du bord de fuite de chacune des gouvernes 10 la plus proche de l'axe longitudinal de l'aéronef.

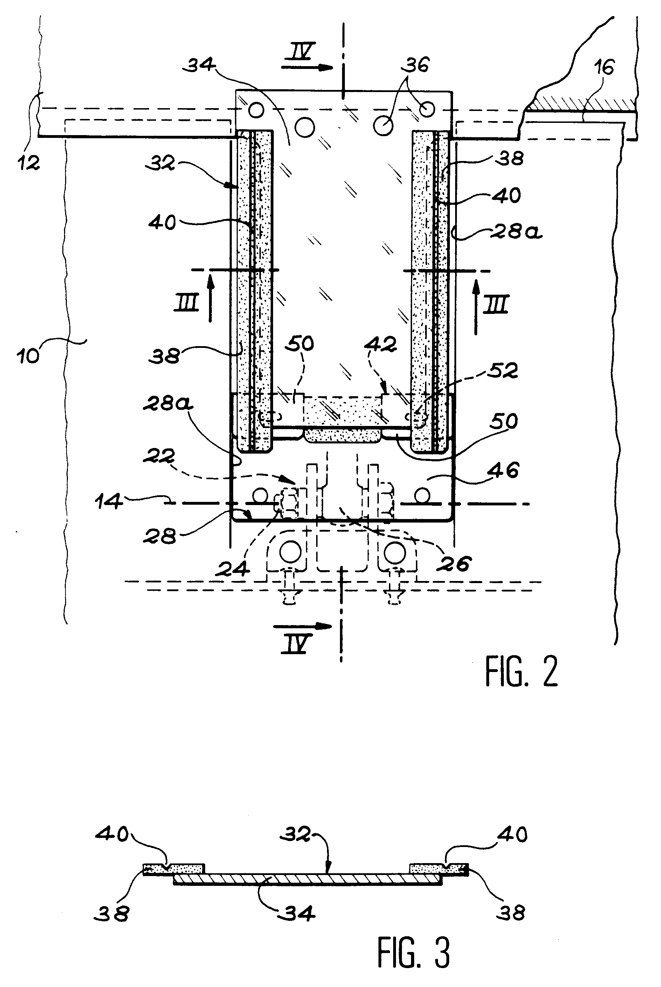

Afin de réduire encore le coefficient de moment de charnière, de le réguler et de linéariser ces variations en fonction de l'angle de braquage de chacune des gouvernes, ces trois techniques classiques sont complétées, conformément à l'invention, par l'adjonction d'un dispositif de protection autour de chacune des charnières 22 (figure 2) par lesquelles les gouvernes sont articulées sur la structure 12.

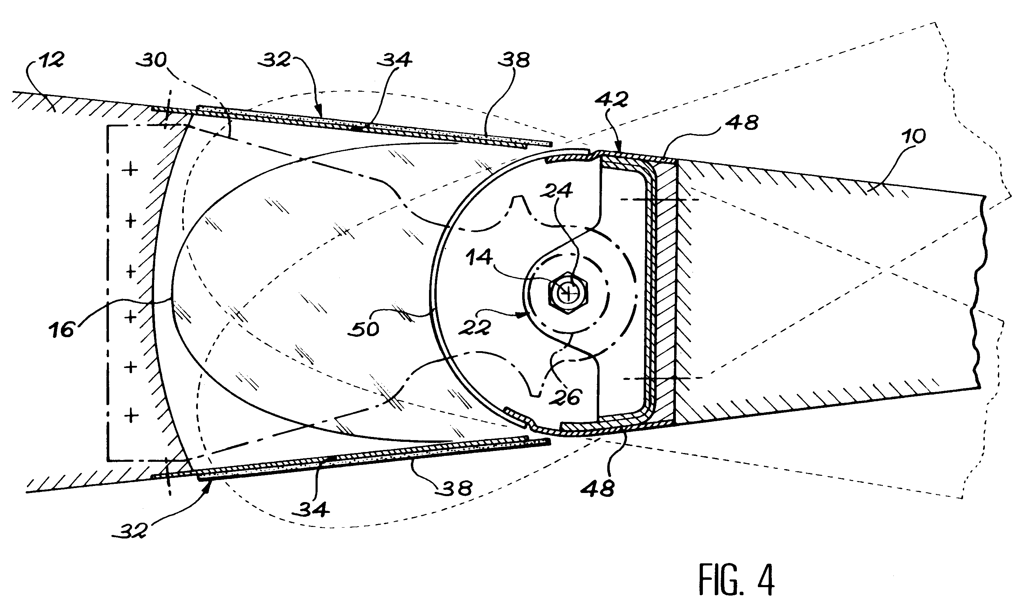

Comme l'illustrent les figures 2 et 4, l'axe géométrique 14 par lequel chacune des gouvernes de profondeur 10 est articulé sur la structure 12 correspondante est matérialisé par des charnières 22 comprenant chacune un axe 24 porté par la gouverne 10 et un palier 26 porté par la structure 12 et dans lequel l'axe 24 est reçu de façon pivotante.

Pour tenir compte du décalage vers l'arrière de l'axe géométrique 14 par rapport au bord d'attaque 16 de la gouverne 10, chacune des charnières 22 est logée dans le fond d'une entaille 28 formée dans le bord d'attaque 16 et le palier 26 est monté sur le bord de fuite de la structure 12 par l'intermédiaire d'un talon 30. L'entaille 28 traverse la gouverne 10 sur toute sa hauteur et présente en vue de dessus deux bords latéraux parallèles 28a (figure 2).

Compte tenu de cet agencement et comme on l'a déjà indiqué, les charnières 22 sont à l'origine de discontinuités fonctionnelles qui tendent à accroître l'effort devant être appliqué sur l'organe de commande pour des angles de braquage élevés et à produire des pulsations gênantes pour le pilotage. Ces discontinuités fonctionnelles sont les jeux transversaux qui existent nécessairement dans les charnières, les discontinuités de profil découlant de la présence des entailles 28 et les interruptions du bord d'attaque 16.

Selon l'invention, ces discontinuités fonctionnelles sont réduites au strict minimum en associant à chacune des charnières 22 un dispositif de protection qui va à présent être décrit en se référant aux figures 2 à 5.

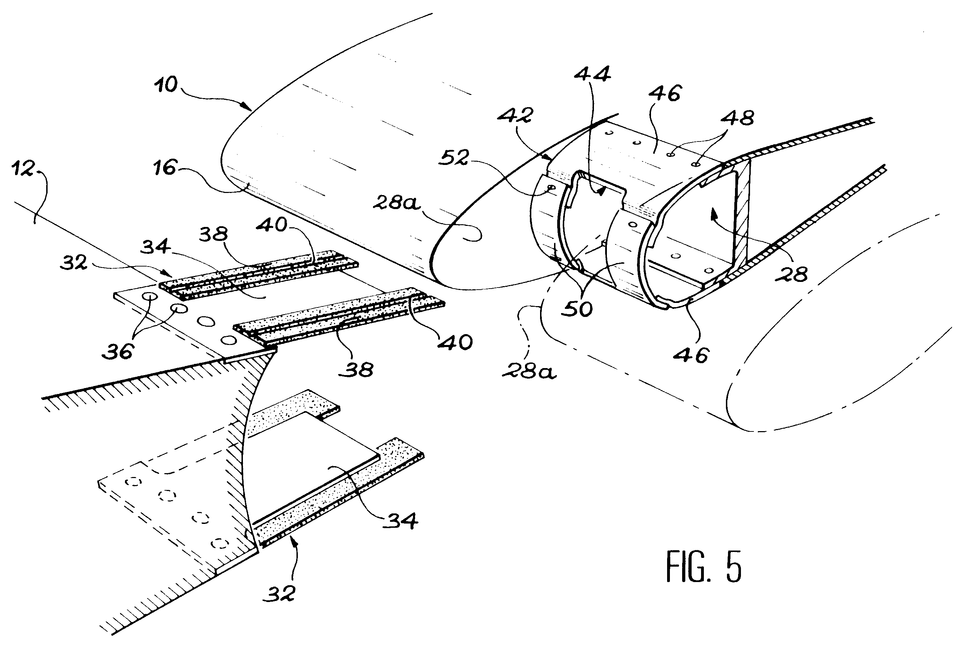

Pour chacune des charnières 22, ce dispositif de protection comprend tout d'abord deux plaques de fermeture 32, fixées à la structure 10. Comme l'illustre notamment la figure 5, les plaques de fermeture 32 font saillie à l'arrière de la structure 12, dans le prolongement des surfaces d'intrados et d'extrados de cette structure. Elles recouvrent la majeure partie de l'entaille 28 dans laquelle est logée la charnière 22.

Dans la forme de réalisation préférentielle illustrée sur les figures, qui concerne l'équipement d'un avion existant, chacune des plaques de fermetures 32 comporte une languette 34, sensiblement plane, fixée sur la structure 12 par exemple au moyen de rivets 36. Une telle languette 34, généralement métallique, existe déjà sur la plupart des avions. Dans sa partie située à la verticale de l'entaille 28, chacune des languettes 34 présente une forme sensiblement rectangulaire et ses bords latéraux sont espacés des bords latéraux 28a de l'entaille 28 d'une distance importante, par exemple d'environ 12,3 mm.

Conformément à l'invention, chacune des plaques de fermeture 32 comprend de plus deux plaquettes 38, sensiblement planes, de forme rectangulaire allongée. Chacune de ces plaquettes 38 est fixée sur la languette 34, par exemple au moyens de rivets (non représentés) le long des bords latéraux de cette languette, de façon à faire saillie au-delà de ces bords latéraux, en ménageant avec les bords latéraux 28a de l'entaille 28 un jeu calibré de largeur réduite, par exemple d'environ 3 mm. Le jeu entre chacune des plaques de fermeture 32 et les bords latéraux de l'entaille 28 est ainsi réduit à une valeur minimale ne risquant pas d'entraver le pivotement de la gouverne 10 autour de l'axe géométrique 14.

Dans la pratique, les plaquettes 38 sont réalisées en un matériau friable tel que du caoutchouc, du plexiglas (Marque déposée), du carbone, du Kevlar (Marque déposée) etc..

En outre, et comme l'illustre notamment la figure 3, chacune des plaquettes 38 comporte des zones de moindre résistance situées, légèrement vers l'extérieur par rapport aux bords latéraux de la languette 34. Ces zones de moindre résistance sont parallèles aux bords latéraux des plaquettes 38 tournées vers les bords latéraux 28a de l'entaille 28. Elles sont constituées, par exemple, par des rainures droites 40 à section transversale en forme de V. Ces rainures 40 s'étendent sur toute la longueur des plaquettes 38. Du fait du caractère friable du matériau constituant les plaquettes, les rainures 40 autorisent donc la rupture des plaquettes lorsqu'un blocage mécanique se produit, du fait d'un agent extérieur tel que le gel. Le fonctionnement des gouvernes 10 est ainsi assuré en toute circonstances malgré la réduction des jeux entre les plaques de fermeture 32 et les bords latéraux des entailles 28 à une valeur minimale.

Il est à noter que les plaquettes 38 peuvent se prolonger légèrement au-delà de l'extrémité de la languette 34, comme l'illustrent les figures, ou se terminer au niveau de cette extrémité. Par ailleurs, si la languette 34 est généralement constituée par une languette existante sur l'avion, cette languette existante peut aussi être remplacée par une languette de plus grande longueur ou par une plaque de fermeture présentant à la fois les caractéristiques de la languette 34 et des plaquettes 38. En d'autres termes, la plaque de fermeture est alors une plaque unique dont les dimensions permettent de limiter le jeu transversal entre cette plaque et les bords latéraux 28a de l'entaille 28 a une valeur calibrée minimale, cette plaque unique comportant des zones de moindre résistance autorisant une cassure des bandes latérales adjacentes aux bords 28a. Ce dernier cas s'applique aussi à la création d'un nouvel avion ou de tout autre engin apte à se déplacer dans un fluide.

En complément aux plaques de fermeture 32, le dispositif de protection selon l'invention comprend aussi avantageusement, une pièce de carénage 42 fixée sur la gouverne 10. Cette pièce de carénage 42 entoure en totalité la charnière 22, à l'exception d'un passage pour le talon 30, consistant en une fenêtre calibrée 44, de forme rectangulaire. Les dimensions de la fenêtre calibrée 44 sont déterminées afin de laisser au talon 30 par lequel le palier 26 est relié à la structure 12 le passage juste nécessaire au débattement maximal de la gouverne 10.

La pièce de carénage 42 présente un profil incurvé, sensiblement semi-circulaire qui prolonge sans discontinuité les surfaces d'intrados et d'extrados de la gouverne 10 au niveau du fond de l'entaille 28.

Dans la forme de réalisation préférentielle illustrée sur les figures, la pièce de carénage 42 comprend deux plaques 46 à section incurvée, fixées respectivement sur les surfaces d'intrados et d'extrados de la gouverne 10, par exemple au moyen de rivets 48. Chacune des plaques 46 s'étend sur toute la largeur de l'entaille 28 et présente en vue de dessus sensiblement la forme d'un rectangle. Le bord avant de chacune des plaques 46 comporte deux parties latérales en saillie sur lesquelles sont fixées deux feuilles de clinquant 50, à section incurvée, reliant entre elles les plaques 46, de part et d'autre de la fenêtre calibrée 44. Les feuilles de clinquant 50 sont fixées sur les plaques 46 par exemple par des rivets 52.

Dans la forme de réalisation préférentielle illustrée sur les figures, qui concerne le cas d'un avion existant, les surfaces d'intrados et d'extrados de la gouverne 10 portent généralement déjà des plaques 46. La pièce de carénage 42 est donc obtenue simplement en adjoignant à ces plaques 46 les feuilles de clinquant 50. En variante, les plaques 46 existantes peuvent être remplacées par des plaques s'étendant plus vers l'avant ou par une pièce de carénage réalisée d'un seul tenant et remplaçant les plaques 46 et les feuilles de clinquant 50. Cette dernière solution est également applicable dans le cas d'un avion de conception nouvelle.

Bien entendu, l'invention n'est pas limitée à la forme de réalisation qui vient d'être décrite à titre d'exemple, mais en couvre toutes les variantes précédemment citées, sans sortir du cadre des revendications qui suivant.En suivent. En particulier et comme on l'a déjà noté, le dispositif selon l'invention peut être utilisé afin de protéger les charnières d'une gouverne d'un engin quelconque apte à se déplacer dans un fluide tel que l'air ou l'eau.

## Revendications

1. Articulation entre une gouverne (10) et une structure (12) d'un engin apte à se déplacer dans un fluide, ladite articulation comprenant une charnière (22) logée dans une entaille (28) formée dans un bord d'attaque (16) de la gouverne et un dispositif de protection comprenant au moins une plaque de fermeture (32) fixée sur la structure (12) et recouvrant partiellement l'entaille, caractérisée par le fait que la plaque de fermeture (32) forme un jeu calibré avec des bords latéraux (28a) de l'entaille (28) et comporte, à proximité de ces bords latéraux, des zones (40) de moindre résistance assurant la cassure de la plaque de fermeture sous l'effet d'un effort excédant une valeur déterminée.

2. Articulation selon la revendication 1, caractérisée par le fait que la plaque de fermeture (32) comporte une languette (34) fixée sur la structure (12) et deux plaquettes (38) fixée sur la languette (34) et définissant ledit jeu calibré avec les bords latéraux de l'entaille, les zones (40) de moindre résistance (28a) étant formées sur ces plaquettes.

3. Articulation selon la revendication 2, caractérisée par le fait que chaque zone de moindre résistance comporte une rainure (40) formée sur chaque plaquette (38), sensiblement parallélement à un bord latéral de cette dernière tourné vers un bord latéral (28a) en vis-à-vis de l'entaille (28)

4. Articulation selon l'une quelconque des revendications 2 et 3, caractérisée par le fait que les plaquettes (38) sont réalisées en un matériau friable.

5. Articulation selon l'une quelconque des revendications précédentes, caractérisée par le fait qu'il comprend de plus au moins une pièce de carénage (42) fixée sur la gouverne (10), à proximité du fond de l'entaille (28), de façon à relier deux faces opposées de la gouverne selon un profil incurvé, une fenêtre calibrée (44) étant formée dans cette pièce de carénage, pour permettre le passage d'un talon (30) reliant la charnière (22) à la structure (12).

6. Articulation selon la revendication 5, caractérisée par le fait que la fenêtre calibrée (44) a sensiblement la forme d'un rectangle.

7. Articulation selon l'une quelconque des revendications 5 et 6, caractérisée par le fait que la pièce de carénage (42) comprend deux plaques (46) à section incurvée, fixées respectivement sur chacune des faces opposées de la gouverne (10), et deux feuilles de clinquant (50) à section incurvée, reliant lesdites plaques à section incurvée, de part et d'autre de la fenêtre calibrée (44)

## Claims

1. Articulation between a control surface (10) and a structure (12) of a craft able to move in a fluid, said articulation comprising the hinge (22) being located in a notch (28) formed in a leading edge (16) of the control surface and a protection device comprising at least one cover plate (32) fixed to the structure (12) and partly covering the notch, characterized in that the cover plate (32) forms a calibrated clearance with the lateral edges (28a) of the notch (28) and has, in the vicinity of these lateral edges, reduced resistance zones (40) ensuring the breaking of the cover plate under the effect of a force exceeding a given value.

2. Articulation according to claim 1, characterized in that the cover plate (32) has a tongue (34) fixed to the structure (12) and two strips (38) fixed to the tongue (34) and defining said calibrated clearance with the lateral edges (28a) of the notch, reduced strength zones (40) being formed on said strips.

3. Articulation according to claim 2, characterized in that each reduced strength zone has a groove (40) formed on each strip (38), substantially parallel to a lateral edge of the latter and turned towards a lateral edge (28a) facing the notch (28).

4. Articulation according to claim 2 or 3, characterized in that the strips (38) are made from a friable material.

5. Articulation according to any one of the preceding claims, characterized in that it also comprises at least one fairing member (42) fixed to the control surface (10) in the vicinity of the bottom of the notch (28), so as to connect two opposite faces of the control surface in accordance with an inwardly curved profile, a calibrated window (44) being formed in said fairing member in order to permit the passage of a stub (30) connecting the hinge (22) to the structure (12).

6. Articulation according to claim 5, characterized in that the calibrated window (44) is substantially shaped like a rectangle.

7. Articulation according to claim 5 or 6, characterized in that the fairing member (42) has two plates (46) with an inwardly curved section, respectively fixed to each of the opposite faces of the control surface (10), and two foil sheets (50) with an inwardly curved section, connecting said plates with an inwardly curved section, on either side of the calibrated window (44).

## Patentansprüche

1. Gelenk zwischen einer Steuerfläche (10) und einer struktur (12) einer Maschine, die sich in einem Fluid bewegen kann, wobei das genannte Gelenk ein Scharnier (22) umfaßt, das in einem Einschnitt (28) sitzt, der in einer Vorderkante (16) der Steuerfläche ausgebildet ist, und eine Schutzvorrichtung mit wenigstens einer Verschlußplatte (32), die an der Struktur (12) befestigt ist und den Einschnitt partiell überdeckt,
**dadurch gekennzeichnet,**
daß die Verschlußplatte (32) mit den Seitenrändern (28a) des Einschnitts (28) ein kalibriertes Spiel bildet und in der Nähe dieser Seitenränder Zonen geringerer Festigkeit (40) aufweist, die unter der Wirkung einer Belastung, die einen bestimmten Wert überschreitet, das Zerbrechen der Verschlußplatte gewährleisten.

2. Gelenk nach Anspruch 1, dadurch gekennzeichnet, daß die Verschlußplatte (32) eine an der Struktur (12) befestigte Zunge (34) und zwei Plättchen (38) umfaßt, die an der Zunge (34) befestigt sind und das genannte kalibrierte Spiel mit den Seitenrändern (28a) des Einschnitts definieren, wobei die Zonen geringerer Festigkeit (40) in diesen Plättchen ausgebildet sind.

3. Gelenk nach Anspruch 2, dadurch gekennzeichnet, daß jede Zone geringerer Festigkeit eine Nut bzw. Rille (40) umfaßt, ausgebildet in jedem Plättchen (38) und im wesentlichen parallel zu einem Seitenrand dieses letzteren, der einem Seitenrand (28a) des Einschnitts (28) gegenübersteht.

4. Gelenk nach einem der Ansprüche 2 und 3, dadurch gekennzeichnet, daß die Plättchen (38) aus einem brüchigen Material hergestellt sind.

5. Gelenk nach einem der vorangehenden Ansprüche, dadurch gekennzeichnet, daß es zudem wenigstens ein Verkleidungsteil (42) umfaßt, befestigt an der Steuerfläche (10) in der Nähe des hintersten Teils des Einschnitts (28), um zwei entgegengesetzte Seiten der Steuerfläche einem bogenförmigem Profil entsprechend zu verbinden, wobei in diesem Verkleidungsteil ein kalibriertes Fenster (44) ausgebildet ist, als Durchlaß für einen Ansatz (30), der das Scharnier (22) mit der Struktur (12) verbindet.

6. Gelenk nach Anspruch 5, dadurch gekennzeichnet, daß das kalibrierte Fenster (44) im wesentlichen die Form eines Rechtecks hat.

7. Gelenk nach einem der Ansprüche 5 und 6, dadurch gekennzeichnet, daß das Verkleidungsteil (42) zwei Platten (46) mit bogenförmigem Querschnitt umfaßt, jeweils an jeder der entgegengesetzten Seiten der Steuerfläche (10) befestigt, und zwei Metallfolien bzw. Metallblechteile (50) mit bogenförmigem Querschnitt, die die genannten Platten mit bogenförmigem Querschnitt verbinden, beiderseits des kalibrierten Fensters (44).
